# EUROPEAN PATENT APPLICATION

(11) **EP 1 544 770 A1**
(43) Date of publication of application: **22.06.2005**
(21) Application number: 04020731.8
(22) Date of filing: 01.09.2004
(51) Int. Cl.: G06F 17/60

(54) **Method and system for assisting a search for articles within a storage or retail facility**

(30) Priority: 17.12.2003 US 738898
(71) Applicant: NCR INTERNATIONAL INC., Dayton, Ohio 45479 (US)
(72) Inventor: Holzman, Thomas Gerard, Marietta, Georgia 30064 (US)
(74) Representative: Williamson, Brian

(57) **Abstract**

A system and method for facilitating searching for an article kept within a storage enclosure is disclosed. The system includes tag detectors, item tags, and appearance data. Selection of an article for searching by a user enables retrieval of appearance data corresponding to the selected article so that the user may be aware of the packaging of the article for the search. If the user requires more detailed information, the tag detectors may be activated to interrogate for an item identifier embodied in an item tag. The magnitude of the response signals are used to determine the location of the selected article so that it may be displayed with the appearance data.

## Description

The present invention relates generally to an inventory management system and more particularly to an inventory management system used to manage a storage facility.

Systems for tracking inventory items are well known. Such systems typically include identification tags for identifying inventory items, a database of inventory item data, and an item detector. For example, an inventory management system that manages a retail store environment uses identification tags applied to items stored in a facility, perhaps in the form of radio frequency identification (RFID) tags, a computer database system, and RFID tag detectors. The identification tags applied to items kept in the retail environment of a store may be read at checkout stations to retrieve data about the items such as pricing, UPC or SKU numbers, and manufacturer identification data, for example. Processing of a transaction at a register may be used to issue a receipt, update inventory counts, trigger item re-ordering, and modify store accounting totals. If RFID tags have been applied to the items sold, they may be deactivated at checkout so that the tags do not activate the tag detectors typically placed at points of egress and ingress for the store. The detectors may detect RFID tags on items being removed from the store without proper authorization and sound an alarm so that security officers may apprehend the person attempting to leave the store premises with the item. Alternatively, the RFID tags may remain active and a computer coupled to the tag detectors may verify that a tag detected in the vicinity of a store exit corresponds to an RFID that has been the subject of a transaction.

Inventory management systems, such as the one described with reference to a retail store environment, may be used in warehouses and other non-retail environments to track the movement of items within an enclosed space. Another interesting use of inventory management systems has been the incorporation of these systems in enclosures, such as home appliances. In U.S. Patent No. 6,327,576, a refrigerator is disclosed that maintains an inventory list of items stored within the refrigerator. The data identifying the contents of the refrigerator are updated with an electronic record of a grocery store receipt that may be obtained over an open network, such as the Internet, or by an electronic receipt issued by the store. The information provided for articles stored in the refrigerator includes expiration data. This information may be used to inform a user that items stored in the refrigerator are about to expire and require replacement.

While the system of the '576 Patent is useful for listing the items stored in a refrigerator and for generating a grocery list for a next visit to the grocery store, it does not help a user locate items within the refrigerator. Although RFID tags may be used to confirm that an article is within the refrigerator, it does not help a user locate the article within the enclosure space. Many times the user may not even know the appearance of an article stored within the refrigerator. This problem of recognizing articles is sometimes encountered when a consumer attempts to purchase an item at a store. Although the buyer may know the product being sought and its brand name, the buyer may not know the packaging used for the article or any useful information regarding the appearance of the product. For example, a buyer may not realize that a blue top, a green top, or a red top on a milk container bottled by the same producer indicates whether the milk is skim, whole, or 2% milk. Thus, data regarding the appearance of a product are not only useful for locating a product but may also convey important information regarding characteristics of the product.

Information regarding the actual location of articles within a storage space or enclosure is important. For example, a stock person in a facility may need to know where particular goods that need restocking are stored in the retail space. Typically, this information is provided by word of mouth from other more knowledgeable employees or by following the aisle markers as the stockperson traverses the retail space floor. These techniques may be time consuming or inefficient. Furthermore, when items are not stored in their correct location because a customer has moved the article from its proper placement, information regarding the proper place for the article is of little value.

Once an article has been moved from its assigned space in a facility or an enclosure, known points of reference for finding the article are no longer available. Consequently, a person searching for the article has to concentrate on remembering features of the article in a new environment. When the article is a drama videotape, for example, and is misplaced among the action videotapes, the searcher must pay careful attention to the titles and images on the videotape jackets. Thus, each jacket must be individually reviewed and considered. This significantly increases the time for a search.

What is needed is a way of providing data regarding the appearance of an inventoried article to facilitate location of the article within a space monitored by an inventory management system.

What is needed is a way of providing information regarding the specific location of items within a storage enclosure.

What is needed is a way of locating a misplaced article and providing information regarding the articles surrounding the selected article so it may be more easily found.

According to a first aspect of the present invention there is provided a system for locating articles managed by an inventory management system, the system for locating comprising: a management terminal for receiving an article search request having an article identifier; a database for storing appearance data for each type of article managed by an inventory management system; and a display for presenting appearance data corresponding to the article identifier in the article search request received by the management terminal.

According to a second aspect of the present invention there is provided a method for facilitating a search for items managed by an inventory management system, the mehod comprising: parsing an article request to identify an article; retrieving appearance data corresponding to the identified article; and displaying the appearance data corresponding to the identified article.

Furthermore, the present invention addresses the above needs, as well as others, with a system for locating articles managed by an inventory management system. The system includes a management terminal for receiving an article search request having an article identifier, a database for storing appearance data for each type of article managed by an inventory management system, and a display for presenting appearance data corresponding to the article identifier in the article search request received by the management terminal. The appearance data are retrieved in response to identification of an article being sought and the data may be provided in a textual, graphic, or audible format. For example, the system may query the database for appearance data, such as a digital image of the requested product, and generate a display of the image so that the user has visual information to assist in the search. The information may also be provided textually but, in conformity with the old adage, "A picture is worth a thousand words," the text is preferably accompanied by an image of the article. The words of the textual description may be provided to a voice synthesizer so that audible words are generated for those who are visually impaired or who do not want an image quality display. For those seeking a compromise between a full digital image display and a simple textual display, a graphical image depicting information regarding the shape of the package and relative dimensions of the package may be displayed instead. The management terminal may be a mobile computer with a display and/or voice synthesizer so that the appearance data may be displayed or enunciated at locations throughout the storage facility.

To further enhance the ability of the system of the present invention to facilitate locating an article within a storage facility, the inventory management system may also include a plurality of article tag detectors for interrogating item tags and receiving responses from item tags, and an article locator for determining an article location from the responses received by at least one of the tag detectors. One or more management terminals may be coupled to one or more article locators so that signals may be communicated between the article locators and the management terminals. For example, the management terminals may provide an article identifier to an article locator so that tag detectors coupled to the article locator may interrogate article tags to detect one or more article tags containing the article identifier. Tag detectors coupled to an article locator may be arranged in a grid arrangement so that the location of an article bearing a tag may be more specifically defined by the location of the detector receiving the strongest response signal. In another embodiment, the tag detectors may be arranged so that the responses induced in the detectors may be used by the article locator to determine the approximate location of an item within a compartment, such as an aisle or shelf, of the enclosure. Preferably, the tag detectors are RFID tag detectors and the article tags are labels with RFID circuitry contained therein so that items may be individually identified and tracked by the inventory management system. However, other tracking technology may be used, such as implanted microchips and contact detectors that read the microchips when the chips and detectors are in contact with one another.

An article locator may also use the tag detectors coupled to it to collect article identifiers in a particular area and provide the article identifiers to a management terminal so that the article identifiers may be used to retrieve the corresponding appearance data. After a management terminal uses at least one tag detector to locate the article identified in an article search request, the tag detectors coupled to an article locator may be used to obtain tag identifiers from other articles proximate the located article. The tag identifiers retrieved through the tag interrogation may then be used to retrieve appearance data, such as images or graphical representations of the corresponding articles from a database so that a context generator may form a context comprised of the located article and the articles in its vicinity. The combined image of the article identified by the search request with its surrounding articles may be displayed to provide the searcher with visual points of reference. The management terminal may further enhance the image or graphical representation by highlighting the selected article in its displayed context. Also, the searcher may use the management terminal to specify a perspective angle so that the context generator rotates the combined image display to orient the image or graphical representation to the searcher's perspective so the display is more useful as a search aid.

The appearance data may also include textual information describing the location and characteristics of articles managed by the system. This textual information may be used to provide an alternative representation of an article in its context. For example, if the videotape "It's a Wonderful Life" is located among the Christmas theme videos then the visual schemes on the surrounding tape jackets may be similar and may not contribute a great deal of distinguishing information to the search. However, if the user requests a textual description, the location of the selected video may be described (Aisle 6, second shelf from the top, 3 feet from the center aisle) along with the information regarding its context ("A Christmas Carol" is on the left and "Carolina Christmas" is on the right). This data may be presented on an image screen or it may be audibly provided through a voice synthesizer associated with the management terminal. The descriptions of the articles identified by a search request and its surrounding articles may also include descriptions of article packages.

A method operating in accordance with the principles of the present invention is comprised of parsing an article search request to identify an article, retrieving appearance data corresponding to the identified article, and displaying the appearance data corresponding to the identified article. The appearance data may be presented audibly, textually, or graphically. The graphical or image data may be oriented in accordance with a perspective identified by a user. An enhancement of the method may include interrogating article tags in response to an article request, detecting a response signal from an item tag corresponding to the article identified by the article request, determining from the detected response signal a location for the article, and displaying the determined location with the appearance data. In one implementation of the method, the article tags are RFID tags and the location data are derived by interrogating the article tags with RFID detectors and deriving spatial coordinates corresponding to the responses of the article tags to the interrogation signals from the detectors. The determined location for an article may be correlated to a particular detector in a grid arrangement or to a location based on the relative strength of response signals received by a plurality of detectors.

A method implementing the present invention may also include interrogating article tags proximate the article identified by the article request to obtain article identifiers for the articles proximate the article identified by the article request, retrieving appearance data corresponding to the article identifiers for the articles proximate the article identified by the article request, generating a context for the article identified by the article request, and displaying the context with the appearance data and determined location for the article identified by the article request. This method also includes retrieving from a database images or graphical representations corresponding to the article identifiers for articles proximate an identified article and displaying the graphical images of the identified article and its surrounding articles so that the article is shown in its context. This context helps provide further visual points of reference for the search. This method may also include highlighting the selected article in its displayed context. Alternatively, the method may include receiving a perspective specification and orienting the combined image display so it is presented from the searcher's perspective to make the display more useful for the search.

The method of the present invention may also include generating textual information describing the location of a selected article and retrieving characteristics of articles managed by the system. The method may generate an alternative representation of an article in its context from the textual data. For example, if the videotape "It's a Wonderful Life" is located among the Christmas theme videos then the visual schemes on the surrounding tape jackets may be similar and may not contribute a great deal of information to the search. However, if the user requests a textual description, the method generates a textual description of the location of the selected video (Aisle 6, second shelf from the top, 3 feet from the center aisle) and retrieves a description of the articles on either side of the selected article ("A Christmas Carol" is on the left and "Carolina Christmas" is on the right). The method may also generate a synthesized voice to present this textual information. The presented textual data may also include descriptions of the packaging.

An embodiment of the present invention will now be described, by way of example, with reference to the accompanying drawings, in which:
Fig. 1 is a system in which the principles of the present invention are implemented for a compact storage enclosure;
Fig. 2 is a grid arrangement of tag detectors for shelves in the enclosure of the system shown in Fig. 1;
Fig. 3 is an arrangement of a plurality of tag detectors for shelves in the enclosure of the system shown in Fig. 1;
Fig. 4 is a flow diagram of an exemplary method implementing the principles of the present invention for one type of storage enclosure;
Fig. 5 is a flow diagram of an exemplary method for displaying a context for a selected article; and
Fig. 6 is a flow diagram of an exemplary method implementing the principles of the present invention for another type of storage enclosure, such as the retail space of a store.

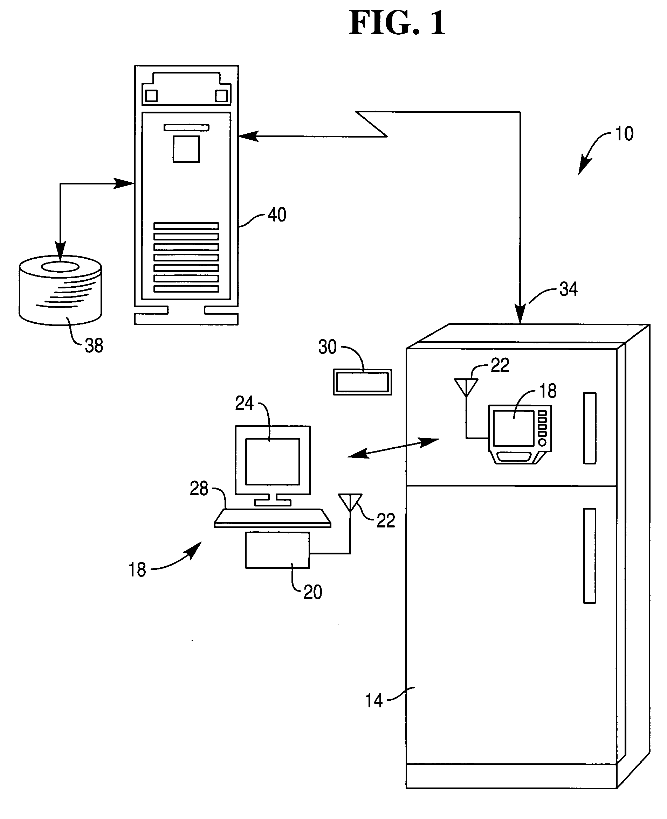

Fig. 1 illustrates an embodiment of the present invention, in which a system 10 is comprised of a storage enclosure 14 and one or more management terminals 18. Enclosure 14 may be any storage space used to house a variety of articles, such as an appliance, retail floor space within a building, or a cabinet. Such spaces are typically comprised of shelves or aisles to segregate the storage space into compartments and a door for securing the storage space from the external environment. Management terminal 18 may include a computer 20, a display 24, and a keypad 28. Computer 20 may be any type of electronic digital computer, including, but not limited to, desktop computers, laptop computers, hand-held notepad computers, kiosks, or personal digital assistants. A display 24 and input device 28 are typically integral components of such computers. Other input devices that may also be included with computer 20 include a mouse, a touch screen, or a voice recognition module. Speakers may be associated with computer 20 and driven by a sound card with a voice synthesizer in computer 20 to generate oral messages. Additionally, computer 20 may also include a storage media reader, such as a diskette reader, smart card or other integrated circuit (IC) card reader. The storage media reader may be used, for example, to read data stored on a smart card 30 or other memory device in which descriptive data regarding the appearance of an article may be stored.

System 10 may also include a communication port 34 for coupling computer 20 to an open network, such as the Internet, for coupling system 10 with a database 38 for the communication of appearance data. Port 34 may be associated with enclosure 14 as shown in Fig. 1 or with computer 20. The components of system 10 may be coupled through wired or wireless methods. Database 38 is shown being coupled to the open network through a server 40. The open network may also include a local area open network (not shown) that couples together computers within a house or other facility, either through a router or in a peer-to-peer environment. Database 38 may be coupled to terminal 18 through the local area network. An article tag detector 22, such as a RFID tag detector, may also be coupled to computer 20 or incorporated in computer 20. As shown in Fig. 1, computer 20 may be mounted to enclosure 14 or coupled to enclosure 14 through cables or wireless communication components. The cable configuration enables a user to move the computer from its mounting so it may be set on a work surface to facilitate the entry of data in terminal 18. Wireless communication enables mobility of computer 20 so it may be moved freely about the area managed by computer 20. Other computers coupled to computer 20 may include a portable digital assistant (PDA) or a kiosk that may be used to obtain search information for items monitored by the inventory management system.

Article tag detector 22 may communicate with computer 20 through an article locator to read an item tag to obtain a unique item identifier as well as a Uniform Product Code (UPC) or Stock Keeping Unit (SKU) identifier for the items managed by the inventory management system implemented with computer 20. The article locator is preferably a computer program or module that interfaces with one or more tag detectors 22. The article locator drives the tag detectors coupled to it so the tag detectors interrogate article tags for specific article identifiers or so the tag detectors collect the article identifiers within their transmission range. An article locator uses the data recovered by the response signals received by the tag detectors and the magnitude of the response signals to identify and locate articles. Management terminal 18 may be coupled to one or more article locators for interrogating article tags and determining the locations of articles. The software and hardware that implements an article locator may be integral to computer 20 or may reside in a component that is separate from but coupled to computer 20.

A list of items kept in the enclosure may be stored within the memory of computer 20 or it may be stored in a data repository or other database coupled to the open network to which terminal 18 is coupled. A user may operate computer 20 by entering commands through keypad 28, a mouse, a touch screen, a stylus, or voice recognition circuit. One command may require a display to be generated of the articles inventoried within enclosure 14. The user may scan the list to find an article for which the user is searching. Alternatively, a user may enter a command identifying an item with a textual description, a UPC, or SKU code. Identifying an article, either by entering an item identifier or by highlighting a list entry, enables computer 20 to query for appearance data that corresponds to the identified article. This appearance data may be presented on display 24 or used to generate an audible message through a sound card and voice synthesizer in computer 20. Using this information, the user may search for the article within enclosure 14. This type of data is useful for locating items having packages with which the user is not familiar.

Enclosure 14 may include a plurality of tag detectors to provide more detailed information regarding the location of items bearing article tags. In response to an article search request, computer 20 may use an article locator to drive the tag detectors to locate one or more items within enclosure 14 that correspond to the article identifier contained in the article search request. For example, if a UPC or SKU code is used and more than one item in the enclosure corresponds to the UPC or SKU code, multiple locations may be identified by the responses received by the tag detectors and processed by the article locator coupled to the tag detectors. From these responses, computer 20 may generate a message providing more than one location because these article identifiers are not unique for each item. An article locator may process the responses from the tag detectors to give a general location for an item, such as "Aisle 7, top shelf, one third from store front end," if all of the responses lie in that general area. However, if the all of the locations do not conform to the same general area because the items have been placed, either intentionally or unintentionally, in various locales, additional messages identifying other locations within enclosure 14 may be generated. If the article identifier used to select an article is unique, such as some RFID identifiers, then the location message may be more specific as it is directed to a single instance of the item. For example, the message for an unique identifier may state, "Aisle 10, third shelf from bottom, 14 feet from store front end, 6 inches from shelf edge." The signals generated in the tag detectors by the interrogated article tags may be conditioned by A/D converters and provided to an article locator so the hardware/software implementing an article locator may derive an approximate location for the responding tags. In smaller enclosures, such as a home appliance or cabinet, location messages may identify a shelf quadrant (front/left, front/right, back/left, or back/right) on which the selected article or article type is stored.

Computer 20 may be used to request a display of an article's context. In response to a context request, a context generator may communicate with an article locator to drive the tag detectors in the vicinity of a located article to interrogate for article identifiers surrounding the located article. The context generator is preferably a computer program or module that processes data obtained by an article locator from tag detectors to generate a context for a located article. The relative magnitudes of the responding signals are used by the article locator to determine the proximity of the responding articles to the selected article. The article identifiers are used by the context generator to retrieve image or graphical data regarding the surrounding articles so the context generator may generate an image or graphical representation of the located article with surrounding articles. In response to a highlight request, the context generator may also highlight the selected article with an enlarged border or other visually enhancing characteristic. A user may also use the input device(s) 28 of computer 20 to select an orientation for the generated image or graphical representation. For example, the user may identify a 45 degree top angle for a perspective. In response, the context generator rotates the generated image or graphical representation to help the user see the located article within its context from the selected orientation.

If a textual, rather than a visual, context is selected by the user, then the context generator in computer 20 retrieves a textual description of the surrounding articles and presents those on display 24. For example, display 24 may first describe the location of the selected article (Aisle 4, top shelf, 4 feet from the back end) followed by descriptions of the surrounding articles (Acme detergent, 36 oz. red box on right and Sudsy detergent, 48 oz. green box on left). These textual descriptions may be provided to a voice synthesizer in computer 20 for an audio presentation of the generated context and a replay function may be provided for selective repeat presentation of the audio data until the selected article is found.

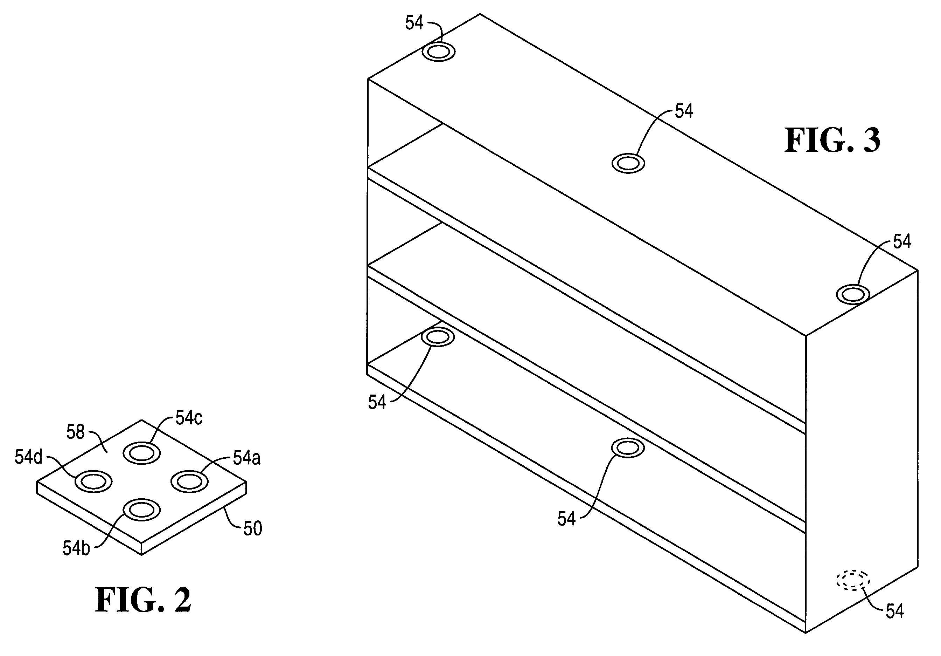

One arrangement for the tag detectors is shown in Fig. 2. There a shelf 50 has a plurality of tag detectors 54 arranged in a grid 58 pattern. In this arrangement, the article locator may be coupled to detectors 54 to independently drive them with a signal or signals that cause the article tags corresponding to an article identifier in an article search request within range of a detector to respond. When the article identifier is a non-unique identifier such as an UPC or SKU code, multiple items corresponding to the article identifier may respond. By driving the tag detectors individually, the magnitude of the responsive signal at each detector may be measured. Those detectors receiving a strong signal or a signal having approximately the same magnitude at multiple detectors identify the location or locations where an article or articles corresponding to the article identifiers are located. When the article is selected using a unique code, such as a RFID code, the only tag detector correlated to the location of the identified article is the one in which the response signal having the greatest magnitude was selected. Each tag detector 54 in grid 58 has a descriptor for its location, such as the shelf number and a front/right 54a, front/left 54b, back/right 54c, or back/left 54d quadrant identifier.

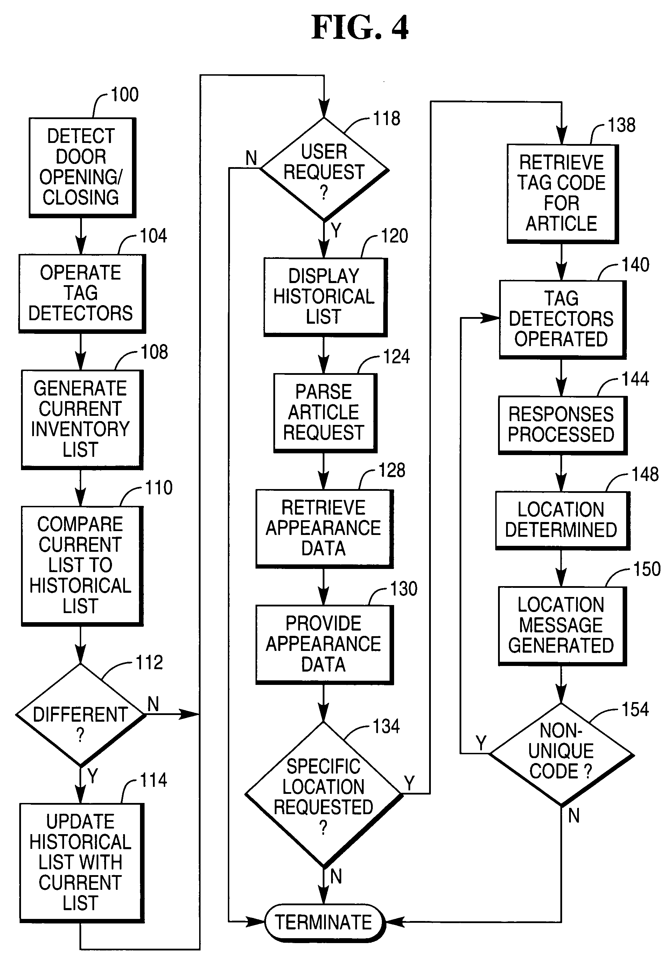

Another arrangement for the tag detectors is shown in Fig. 3. This arrangement places tag detectors throughout an enclosure so that signals from the detectors cover the item storage space of an enclosure. For example, as shown in Fig. 3, detectors 54 are placed on the top and bottom shelves of an aisle at intervals so that the entire aisle is covered by at least one signal from a detector 54. As the detectors are independently driven and then monitored for a response, the strength of the response may be conditioned and provided to an article locator where they may be measured and used to estimate a location from the detector. Signals induced in multiple detectors may be used to refine the location determination. While the description of the detectors set forth above uses the detectors for both transmission of an interrogating signal and reception of a response signal, the detectors may include a transmitter and a receiver. The transmitter may be turned off before a response signal is measured in the receiver.

An exemplary method for implementing the principles of the present invention in a small enclosure is shown in Fig. 4. The method detects the opening and closing of an access door to the enclosure (block 100). The tag detectors are operated to obtain a response from the article tags within the enclosure (block 104) and a current inventory list of the appliance contents is generated (block 108). This list includes location coordinates for each article. The current list is compared to an historical inventory list to determine whether the contents of the enclosure have changed (block 110). If they have changed (block 112), the historical list is updated with the current list (block 114). Otherwise, no updating occurs. In response to a user request for item location (block 118), the historical list is displayed (block 120). After a user has selected an item from the list, a location request is parsed to identify the item (block 124) and appearance data is retrieved (block 128). The appearance data may be provided to the user to facilitate the user's search for the item (block 130). If more specific information is desired (block 134), the tag code for the item is retrieved (block 138). The tag detectors are operated to scan for the tag code (block 140). Upon receiving a response that corresponds to the requested tag code (block 144), the item location is determined (block 148). This information is then provided to the user to facilitate the search for the item (block 150). If the other tag codes correlate to an article identifier, i.e., more than one article matches the non-unique description (block 154), the search continues until all of the items have been located and reported to the user (blocks 140-154). When all of the items have been found, the process terminates.

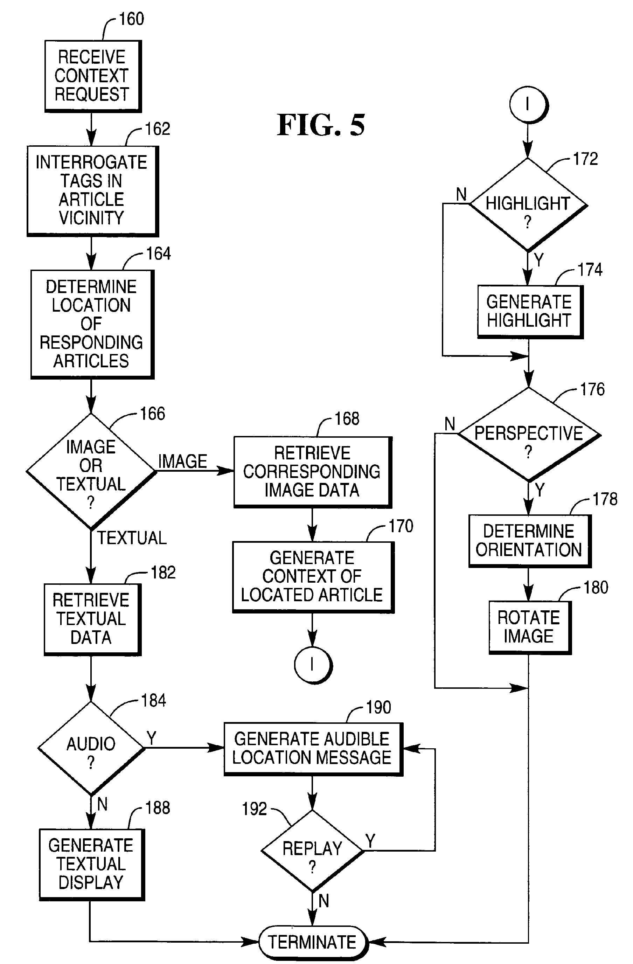

The process may also process a request to display an article's context as shown in Fig. 5. In response to receipt of a context request (block 160), the tag detectors interrogate the article tags in the vicinity of a selected article for article identifiers (block 162). The relative magnitudes of the responding signals are used to determine the proximity of the responding articles to the selected article (block 164). If the request is for an image context (block 166), the article identifiers are used to retrieve image or graphical data regarding the surrounding articles (block 168) and an image or graphical representation of the selected article with the surrounding articles is generated (block 170). In response to a highlight request (block 172), the selected article is highlighted (block 174). The highlighting may be an enlarged border or other visually enhancing characteristic. A request for a particular perspective may also be processed (block 176). A selected orientation for the generated image or graphical representation is received (block 178) and the generated image or graphical representation is correspondingly rotated to help the user see the context from the selected orientation (block 180). For example, the user may identify a 45 degree top angle for a perspective.

If a textual, rather than a visual, context is requested by the user, a textual description of the selected article and surrounding articles is retrieved (block 182). The process also determines whether the requested textual presentation is to be presented in audio format (block 184). If not, the retrieved descriptions are presented on display 24 (block 188). For example, display 24 may first describe the location of the selected article (Aisle 4, top shelf, 4 feet from the back end) followed by descriptions of the surrounding articles (Acme detergent, 36 oz. red box on right and Sudsy detergent, 48 oz. green box on left). If an audio format is selected, the textual descriptions may be provided to a voice synthesizer in computer 20 for an audio presentation of the generated context (block 190) and a replay function may be provided for selective repeat presentation of the audio data (block 192).

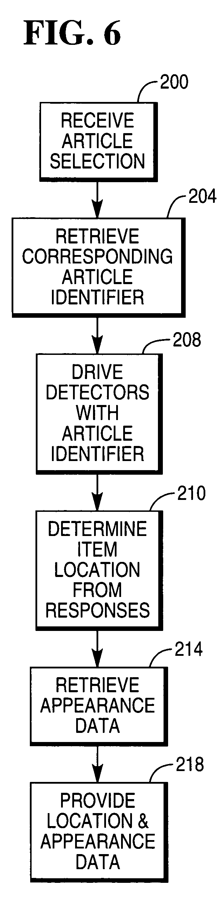

For enclosures that either have a large amount of storage space or that have frequent door openings and closings, another method, depicted in Fig. 6, may be used to facilitate searching for articles. After an article selection has been received (block 200), a corresponding item identifier is retrieved (block 204). Each detector in the system uses the identifier to interrogate for the item (block 208). The magnitude of the response signals received in the detectors receiving response signals are used to determine an item's location (block 210). The appearance data for the located article is retrieved (block 214) and the location data and appearance data may be displayed at computer 20, on the display of a PDA, or at a kiosk (block 218). This information then facilitates the user's search for the identified article. The method of Fig. 6, may also incorporate the method of Fig. 5 to provide context for a selected article in a particular orientation or in different formats.

In operation, detector tags, such as RFID tags, are applied to items that are stored in an enclosure or other facility. Detectors are arranged in the enclosure to cover the storage area. Thereafter, upon the opening and closing of a door to the enclosure, the system may interrogate the storage space of the enclosure and update its inventory list. If a user selects one of the items on the list, the detectors may be operated to determine the location of the article so that the location coordinates may be displayed or announced with the appearance data corresponding to the selected article. Alternatively, a user may identify an article being sought by UPC, SKU code, or item identifier, such as an RFID code, and the detectors are operated to locate one or more articles corresponding to the article selection code. This location data may then be displayed with the appearance data to facilitate the search for the article.

While the present invention has been illustrated by the description of exemplary processes and system components, and while the various processes and components have been described in considerable detail, applicant does not intend to restrict or in any way limit the scope of the invention by the inclusion of such detail. Additional advantages and modifications will also readily appear to those skilled in the art without departing from the scope of the general inventive concept.

## Claims

1. A system for locating articles managed by an inventory management system, the system for locating comprising a management terminal for receiving an article search request having an article identifier; a database for storing appearance data for each type of article managed by an inventory management system; and a display for presenting appearance data corresponding to the article identifier in the article search request received by the management terminal.

2. The system of claim 1, wherein the display is an image screen and the appearance data is image data, the image data being presented on the image screen to facilitate a search.

3. The system of claim 1, wherein the display is an image screen and the appearance data is textual data describing the location of the selected article, the textual data being presented on the image screen to facilitate a search.

4. The system of claim 3, wherein the display includes a voice synthesizer and the textual data is audibly presented by the voice synthesizer.

5. The system of any preceding claim, including a mobile management terminal for receiving appearance data in response to an article search request.

6. The system of any preceding claim including a plurality of tag detectors for interrogating item tags and receiving responses from item tags; and an article locator for determining an article location from the responses received by at least one of the tag detectors.

7. The system of claim 6, wherein the tag detectors are arranged in a grid pattern.

8. The system of claim 6, wherein the tag detectors are radio frequency identification (RFID) tag detectors.

9. The system of any of claims 6 to 8, wherein the tag detectors are arranged in quadrants for a shelf.

10. The system of any of claims 6 to 9 comprising a context generator coupled to the article locator for generating a context for a located article from response signals obtained from articles in the vicinity of the located article.

11. A method for facilitating a search for items managed by an inventory management system, the method comprising parsing an article request to identify an article retrieving appearance data corresponding to the identified article; and displaying the appearance data corresponding to the identified article.

12. The method of claim 11, wherein the retrieval of appearance data includes retrieval of image data corresponding to the identified article and the display of the appearance data includes generating an image from the retrieved image data.

13. The method of claim 11, wherein the retrieval of appearance data includes retrieval of textual data corresponding to the identified article and the display of the appearance data includes generating an audible message from the retrieved textual data or display of the appearance data includes displaying the textual data on an image screen.

14. The method of any of claims 11 to 13 comprising interrogating article tags in response to the article request; detecting a response signal from an item tag corresponding to the article identified by the article request; determining from the detected response signal a location for the article identified by the article request; and displaying the determined location with the appearance data.

15. The method of any of claims 11 to 14 including interrogating article tags proximate the article identified by the article request to obtain article identifiers for the articles proximate the article identified by the article request; the retrieving appearance data corresponding to the article identifiers for the articles proximate the article identified by the article request; generating a context for the article identified by the article request; and displaying the context with the appearance data and determined location for the article identified by the article request.

16. The method of claim 15, the displaying further including displaying the determined location and appearance data on a display of a mobile management terminal, highlighting a located article within the generated context and rotating the generated context to a specified orientation.
